# EUROPEAN PATENT SPECIFICATION

(11) **EP 2 336 730 B1**
(45) Date of publication and mention of the grant of the patent: **17.05.2017**
(21) Application number: 09425503.1
(22) Date of filing: 09.12.2009
(51) Int. Cl.: G01D 5/48

(54) **Improved magnetostrictive position transducer**
Verbesserter magnetostriktiver Positionswandler
Transducteur de position magnétostrictive améliorée

(43) Date of publication of application: 22.06.2011
(73) Proprietor: Gefran S.p.A., 25050 Provaglio d'Iseo (Brescia) (IT)
(72) Inventor: Giuliani, Andrea, 25050 Provaglio d'Iseo (Brescia) (IT); Campana, Gianvincenzo, 88900 Crotone (IT); Loda, Damiano, 25060 Cellatica (Brescia) (IT); Tempini, Piero, 25055 Pisogne (Brescia) (IT)
(74) Representative: Long, Giorgio

(56) References cited:
- EP-A2- 1 524 504
- DE-A1- 10 164 121
- DE-A1- 19 922 965
- DE-C1- 19 756 577
- US-A- 4 297 602
- US-A- 4 924 711
- US-A- 5 331 062
- US-A- 5 747 986

## Description

The object of the present invention is a position transducer with a magnetostrictive effect. Particularly, the object of the invention is an improved position transducer which is easy to be implemented.

A position transducer with a magnetostrictive effect is known to comprise a waveguide consisting of a wire (or a tube) made of a soft ferromagnetic material travelled by current pulses.

At a measurement point external to the waveguide there is positioned a permanent magnet, which determines the point being subjected to position measurement within the transducer operating area. A current pulse traveling along the waveguide creates a circular magnetization on the latter. At the permanent magnet, the circular magnetization field interferes with the magnet field thereby generating on the waveguide a localized distortion by magnetostrictive effect (Wiedemann effect). This distortion generates a torsional wave which travels as an acoustic wave on the waveguide.

The magnetostrictive transducer comprises means to detect the torsional wave traveling along the guide which are generally placed at a first end of the waveguide. These means comprise, for example, a coil suitable to detect the magnetic field associated with the torsional wave traveling along the guide from the magnet position and to turn the same into an electric signal which can be processed. Particularly, starting from the transduced signal, a suitable electronic circuitry is capable of measuring the time interval elapsed from the moment when the excitation current pulse has been sent and the detection moment of the generated torsional wave on the coil. The measurement of this time interval is used to determine the distance between the magnet and the coil which represents the data as supplied from the transducer.

Furthermore, the magnetostrictive transducer generally comprises dampening means placed at a second end of the waveguide opposite the first end. This dampening means are suitable to dampen the torsional acoustic wave which propagates on the waveguide from the magnet position in the opposite direction relative to the torsional wave detection means.

It should be observed that the transducer waveguide, besides being electrically connected to an electronic circuit generating the excitation current pulse, also requires to be mechanically connected to other components of the transducer, such as, for example, a containment and support outer tube, a board comprising the electronic circuits arranged for processing the signal transduced from the coil, support means for the coil, etc.

This mechanical connection of the waveguide can be provided in different manners known to those skilled in the art.

A first connection mode provides that the second end of the waveguide is fastened to the outer support tube, whereas the first end of the guide is kept loose, i.e. it is not fastened to other transducer components. This solution has some drawbacks due to waves reflected at said guide first end.

In fact, the torsional wave, after it has been detected on the coil, does not disappear but travels beyond the coil to the first terminal end of the waveguide. This wave is reflected at this first terminal end and travels back throughout the guide to the second end of the latter, where it is dampened.

The wave reflected at the first terminal end can interfere with the original wave to be detected on the coil such as to alter the shape thereof. Thereby, a consequent alteration is also obtained of the transduced electric signal, which, as is known, to be properly processed requires to have, for example, a pulsed development, substantially similar to a sinusoid period of suitable amplitude.

To avoid the inconvenience caused by the reflected wave, the waveguide is positioned such that the distance from a center of the detection coil and the first terminal end of the guide is equal to 1/4 wavelength of the original wave. Thereby, the reflected wave is in phase with the original wave under a constructive interference. This solution is, however, difficult to be implemented as the positioning of the first terminal end of the waveguide relative to the coil center can change as a function of the temperature following an expansion/contraction of various extent between the waveguide and the support outer tube.

As an alternative to this solution, preferably, the original wave is completely dampened, which is detected from the coil, before it reaches the first terminal end of the guide and is reflected. To this purpose, the first terminal end of the guide is moved away from the center of the coil such that further dampening elements can be included within the transducer structure at this first terminal end. Thereby, however, there results a greater size of the transducer with the same operating measurement range.

A further manner for mechanically connecting the waveguide to the transducer structure provides for the possibility of directly fastening the first end of the guide, i.e. the end proximate to the detection means of the torsional wave, to another structural component of the transducer, for example, by providing a rigid fastening with the electronic circuit board for the processing of the transduced signal. In this case, in order to mitigate the disturbing effects of the reflected wave generated by the interaction of the wave with this rigid fastening, it is required to place dampening elements at the rigid fastening. These additional dampening elements provide, however, a greater overall size of the transducer.

A further known solution provides to fasten the first end of the waveguide to the transducer support structure by means of a mechanical fitting. However, the provision of this mechanical fitting increases the transducer manufacture complexity.

Document EP 1524504 A2 describes a position sensor having a waveguide, an associated detector coil and a position element, e.g. a position magnet, which is displaced along the waveguide. The central part of the waveguide between a detection region and the opposing free end lies within a hollow return conductor of an electrically conductive non-magnetic material.

Document US 4924711 A describes a force transducer which uses current pulses in a conductor to generate acoustic pulses in a magnetostrictive delay line. The force transducer is used in stress arrays providing an indication of load distribution.

Document US 4297602 describes a co-ordinate plate for a co-ordinate reader which utilizes delays of oscillation waves in a magnetostrictive material.

Document US 5747986 describes array sensors based on the magnetostrictive delay line technique.

Document DE 10164121 A1 describes a magnetostrictive path measurement system in which the duration of the excitation pulse is optimized based on a table of correction values and magnet positions.

The object of the present invention is to conceive and provides a position transducer, particularly of a magnetostrictive type, which allows at least to overcome the drawbacks stated above with reference to the known manners for connecting the waveguide to the other transducer components. Particularly, the object of the invention is to provide a position transducer which has a reduced size and is easy to manufacture.

This object is achieved by means of a magnetostrictive transducer in accordance with claim 1. Preferred embodiments of said transducer are as defined in the dependent claims 2-18.

Further characteristics and advantages of the magnetostrictive transducer according to the invention will result from the following description of preferred exemplary embodiments, which are given as non-limiting illustrations, with reference to the annexed figures, in which:
- **Fig. 1** illustrates a perspective and partially exploded view of a position transducer according to the invention during an intermediate fabrication step;
- **Fig. 2** illustrates an enlarged view of a transducer portion in Fig. 1;
- **Fig. 3** illustrates an enlarged view of the transducer portion in Fig. 2 during a final fabrication step;
- **Fig. 4** illustrates a side view of the transducer portion in Fig. 3.

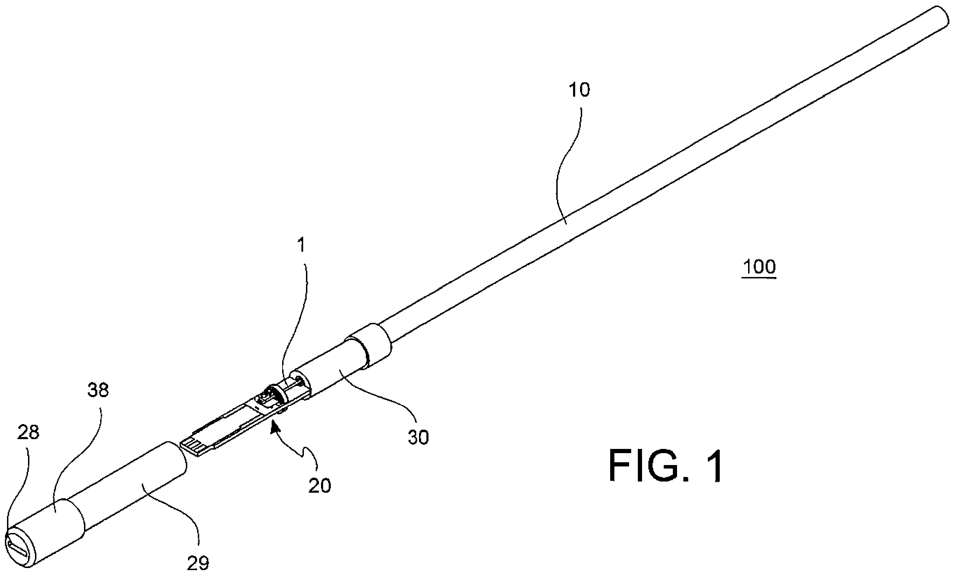

With reference to said Fig. 1-4, with 100 has been generally designated a position transducer with a magnetostrictive effect according to an example of the invention. Particularly, Fig. 1 shows the position transducer 100 in an intermediate fabrication step in which the transducer components are assembled to each other to be mechanically and/or electrically connected to each other.

Particularly, the magnetostrictive position transducer 100 (hereafter, the magnetostrictive transducer) comprises a waveguide 1, for example a wire as shown in Fig. 1, fabricated from a magnetostrictive material, preferably from a nickel alloy.

Alternatively to the wire, the waveguide 1 can be a circular section tube of a magnetostrictive material or a bar having a different section, such as squared, rectangular, polygonal, oval, and the like. Herein below, for clarity's sake, by waveguide 1 will be meant a wire-like guide.

Said waveguide 1 is suitable to propagate torsional mechanical waves generated on the basis of an interaction of a magnetic field external to the guide and a circular magnetic field generated by at least one excitation current pulse associated thereto.

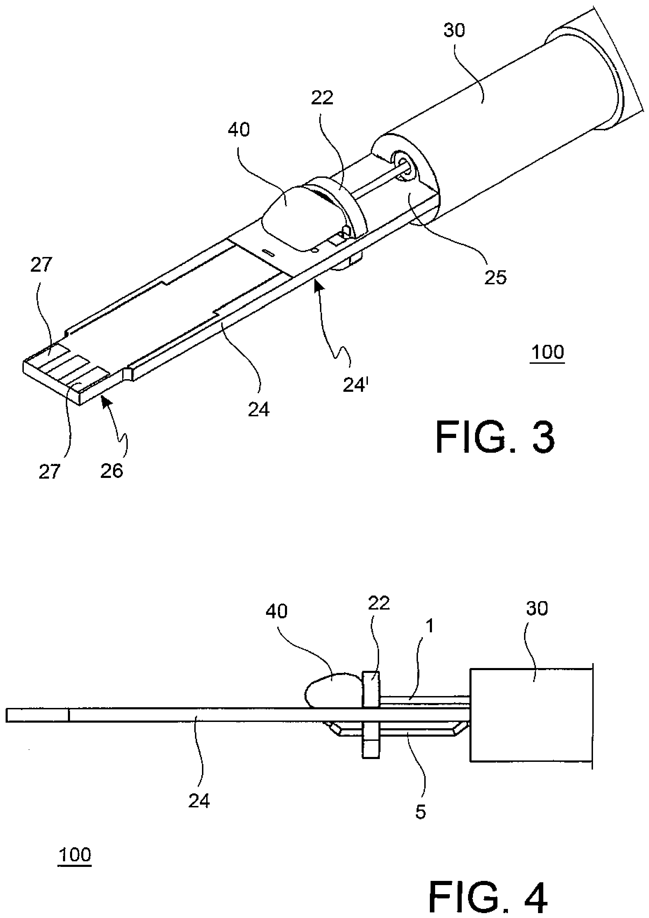

The magnetostrictive transducer 100 further comprises an electric conductive element 5 (shown in detail in Fig. 4) operatively associated with the wire-like waveguide 1. This conductive element 5 is preferably a copper wire. Particularly, said copper wire 5 is electrically connected to the waveguide 1 to provide a closed electric path for the excitation current pulse of the transducer 100. Thereby, the waveguide 1 is representative of a forward path for this current pulse, whereas the copper wire 5 is representative of a backward path.

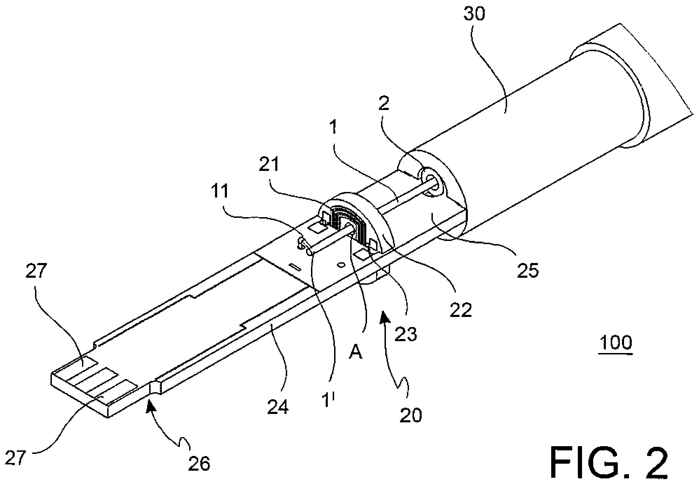

With reference to Fig. 1, and as shown in greater detail in Fig. 2 and 3, the waveguide 1 of the transducer 100 is fitted within a substantially tubular sheath 2. This sheath is configured to coat the waveguide throughout the length thereof and is made from, for example, a glass fiber fabric. This sheath 2 is further made as one piece or can comprise a plurality of contiguous segments.

The waveguide 1 coated by the sheath 2 is accommodated within a containment and support tubular element or support tube 10 manufactured from an insulating material, for example polycarbonate.

As is known to those skilled in the art, the support tube 10 is, in turn, accommodated within a further metal tube (not shown in the figures) to which at least one magnetic-type locator (permanent magnet), i.e. a magnetic cursor moving relative to the magnetostrictive transducer. This locator determines the point being the object of measurement of the position of the operating area of the transducer 100.

It should be observed that also the copper wire 5 of the backward pathway of the transducer 100 is accommodated within the support tube 10.

The position transducer 100 comprises detection and transduction means 20 of torsional waves generated on the waveguide 1. These detection and transduction means 20 are, particularly, associated with a terminal end 1' of the guide 1 and are connected to the support tube 10 by means of a joining member 30, for example, of tubular shape, manufactured from a plastic material.

In greater detail, with reference to Fig. 2 and 3, these detection and transduction means 20 comprise a coil 21 which is, for example, manufactured on a plane support 22 that is suitable to be inserted within a respective seat 23 provided on a support element 24 for this coil 21. As shown in Fig. 2 and 3, the support element is embodied by a support plate 24.

It should be observed that the support plate 24 is suitable to accommodate a first electronic printed circuit board configured to process the electric signal transduced from the coil 21 following the detection of a torsional wave that propagates in the guide 1.

It should be observed that, in the exemplary embodiment of the transducer 100 of Fig. 2 and 3, the planar support 22 of the coil 21 is transversally oriented relative to the longitudinal development of the waveguide 1 such that a plurality of planar turns of the coil 21 result substantially orthogonal to this guide 1. In a further embodiment, the planar coil 21 can be directly provided on the support plate 24 such that the respective planar turns are parallel to the waveguide 1. In another embodiment, the planar support 22 of the coil 21 can take relative to the support plate 24 any inclination ranging between the orthogonal position of the turns relative to the waveguide 1 and the parallel position of the same relative to the guide.

It should be observed that the planar support 22 of the coil 21 comprises a first through-opening A configured to allow the insertion and the support of the waveguide 1. Similarly, a second through-opening provided in the planar support 22 (not shown in the figures) is such as to allow inserting the return copper wire 5.

Furthermore, an end 25 of the support plate 24 proximal to the coil 21 is fixed to the joining member 30 and accordingly to the tube 10.

The support plate 24 of the planar coil 21 comprises, at a respective distal end 26 from the coil 21, a plurality of electric contacts 27, for example six electric contacts, preferably of copper (only three contacts are shown in Fig. 2 and 3). This distal end 26 is shaped as to engage, under operating conditions, a respective through-seat 28 of a tip 38 of the transducer 100 shown in Fig. 1. This tip 38 is, for example, made of plastics and is fitted on a coating element 29 of the support plate 24.

In greater detail, this coating element 29 has a substantially tubular shape, and is suitable to accommodate both the support plate 24 and the planar coil 21. It should be observed that the coating element 29 is made from a shielding nickel alloy with external magnetic fields, preferably a high-magnetic permeability ferromagnetic alloy. Thereby, the coating element 29 has a function of protection and magnetic shielding of the coil 21 of the transducer 100.

It should be observed that the support plate 24 can be connected, by means of the electric contacts 27, to a further electronic circuit for the generation of the excitation current pulses. In greater detail, the transducer 100 comprises a conductive element 11 joining the terminal end 1' of the waveguide 1 to a metal track that is provided on the plate 24 and connected to said contacts 27. In other words, the joining element 11 electrically connects the waveguide 1 to the electronic circuitry generating the excitation current pulses thereby ensuring electric continuity therebetween. This joining conductive element 11 is embodied, for example, by a conductive wire or tape preferably made of copper. In addition, this joining element 11 is more flexible than the waveguide 1. In the case where this conductive element is a wire 11, the diameter of a respective cross-section of this wire is comprised between 0.05 mm and 0.25 mm, preferably 0.15 mm.

It should be observed that a first end of the joining conductive wire 11 is mechanically fastened to the terminal end 1' of the wire-like waveguide 1 by means of a soldering. This soldering provides a rigid fastening between the conductive wire 11 and the guide 1. Said soldering defines on the terminal end 1' of the guide 1 a respective soldering area lower than or almost equal to the area of a cross-section of the waveguide 1. This soldering is, for example, a tin soldering, a resistance soldering, or a laser soldering.

A further soldering similar to the above is provided to firmly fastening a second end of the conductive wire 11 to the metal track arranged on the plate 24.

Furthermore, the transducer 100 comprises a coating element 40 for the terminal end 1' of the waveguide 1 and for fixing said end to the support plate 24. Particularly, this coating and fixing element 40 is put down on the plate 24 to completely coat and enclose the terminal end 1' of the guide 1 and the conductive wire 11 to cover a middle portion 24' of the plate 24 as shown in Fig. 3 and 4.

It should be observed that the coating and fixing element 40 is made of a polymeric material. Particularly, this coating and fixing element 40 is a pure resin or a polymeric compound. This compound particularly comprises a resin, additives, and fillers. Furthermore, the compound comprises cross-linkers and solvents.

It should be observed that the resin referred to herein is a Room Temperature Vulcanizing (RTV) silicone or epoxy resin. This resin is suitable to be firmly adhered to metals and plastics.

Furthermore, the above mentioned fillers are insulating fillers comprising, for example, titanium dioxide, zinc oxide, silica, alumina, glass.

In an alternative embodiment, this fillers are conductive fillers comprising dust or granules of metal materials, such as for example silver or copper.

It should be observed that the resin comprised in the polymeric compound has a weight percentage of more than 30%, preferably 70% to 90%.

Furthermore, the additives, cross-linkers and solvents of the polymeric compound have a weight percentage ranging between 0% and 30%, preferably 0% and 10%.

In addition, the fillers of the polymeric compound have a weight percentage ranging between 0% and 70%, preferably 0% to 20%.

It should be observed that the coating and fixing element 40 of the transducer 100 formed by the polymeric compound described above has a tensile strength at break greater than 1 MPa. In addition, this coating and fixing element 40 has an elongation at break ranging between 50% and 500%, preferably 100%. In addition, the coating element 40 has a shore A hardness ranging between 20 and 80, preferably 45.

The coating and fixing element 40 made by means of the polymeric compound described above advantageously has visco-elastic characteristics and the Applicant has found that it is an effective dampening means for torsional elastic waves propagating on the waveguide 1.

It should be observed that, by means of this coating and fixing element 40, the terminal end 1' of the waveguide 1 is fixed in a non-removable manner to the support plate 24, whereas a respective further end of the waveguide 1 opposite said terminal end 1', is loose as it is not fastened to the support tube 10.

The magnetostrictive position transducer 100 of the present invention has a number of advantages.

Particularly, using the polymeric compound as the coating and fixing element 40 allows fixing the end 1' of the waveguide 1 of the transducer 100 to the support plate 24 of the coil 21 in a simple and cost-effective manner.

In addition, the Applicant has found that providing this fixing element 40 using a resin or compound having dampening visco-elastic characteristics allows eliminating any distortion of the reflected wave which are generated on the soldering between the waveguide 1 and the joining wire 11. Thereby, the transducer 100 of the invention does not require using bulky additional dampening elements placed at the torsional wave detection means as is the case with the prior art solutions.

Furthermore, in the transducer 100 of the invention the mutual position of the terminal end 1' of the waveguide 1 and centre of the coil 21 is set such that a constructive interference is established between the original torsional wave and the reflected wave. This mutual position is not subjected to significant variations at the traditional operating temperatures of the transducer 100, for example between -30° and +80°. In fact, fixing the waveguide 1 to the plate 24 rather than to the outer support tube 10, causes the relative position of the waveguide 1 relative to the coil 21 to be independent from expansion/contraction effects of different extent that may occur when the temperature is changed, which on the other hand occur when the waveguide 1 is connected to the outer tube 10.

Therefore, the transducer 100 of the invention avoids the drawback of the reflected wave which is experienced in the prior art solutions and maintains unchanged performance within the above-mentioned temperature range.

In addition, the Applicant has found that the size of the soldering area surface (for example, resistance or laser) between the joining wire 11 and the terminal end 1' of the waveguide 1 also contribute to generate in this terminal end 1' a reflected wave non-interfering with the torsional wave detected by the coil 21. Thereby, the precision of the measurement of the transducer 100 is ensured.

To the embodiments of the transducer as described above, those skilled in the art, in order to meet contingent requirements may carry out modifications, adaptations and replacements of elements with others functionally equivalent, without departing from the scope of the claims below. Each one of the characteristics described as belonging to a possible embodiment can be provided independently from the other embodiments described herein.

## Claims

1. A tubular magnetostrictive position transducer (100), comprising:
- a magnetostrictive waveguide (1) suitable to propagate torsional mechanical waves, said waveguide being accommodated within a support tube (10);
- detection and transduction means (20, 21) of said torsional waves connected to the support tube (10) so that to be operatively associated with an end (1') of the waveguide (1);
- a support element (24) for said detection and transduction means (20, 21);
- an element (40) made of a polymeric material coating said end (1') of the waveguide (1) and fixing said end to said support element (24),
**characterized in that** said support element comprises a support plate (24) fixed to the support tube (10) proximal to said end (1') of the waveguide (1), the element (40) of polymeric material fixing said end (1') to the support plate (24).

2. The position transducer (100) according to claim 1, wherein said support plate (24) is configured to accommodate an electronic printed circuit board configured to process the electric signal transduced from said detection and transduction means (20, 21).

3. The position transducer (100) according to claim 1, wherein said coating and fixing element (40) made of a polymeric material is a resin or a polymeric compound.

4. The position transducer (100) according to claim 3, wherein said compound comprises a resin, additives, and fillers.

5. The position transducer (100) according to claim 3 or 4, wherein said resin is a room temperature vulcanizing (RTV) silicone or epoxy resin.

6. The position transducer (100) according to claim 4, wherein staid compound comprises cross-linkers and solvents.

7. The position transducer (100) according to claim 4, wherein said fillers are insulating fillers comprising: titanium dioxide, zinc oxide, silica, alumina, glass.

8. The position transducer (100) according to claims 4 to 7, wherein said polymeric compound resin has a weight percent of more than 30%, preferably 70% to 90%.

9. The position transducer (100) according to claim 8, wherein said polymeric compound additives, cross-linkers and solvents have a weight percentage ranging between 0% and 30%, preferably 0% to 10%.

10. The position transducer (100) according to claim 8 and 9, wherein said polymeric compound fillers have a weight percentage ranging between 0% and 70%, preferably 0% to 20%.

11. The position transducer (100) according to claim 4, wherein said fillers are conductive fillers comprising silver or copper dust or granules.

12. The position transducer (100) according to at least one of the preceding claims, wherein said coating and fixing element (40) made using the polymeric compound has a tensile strength at break greater than 1 MPa.

13. The position transducer (100) according to at least one of the preceding claims, wherein said coating and fixing element (40) made musing the polymeric compound has an elongation at brake ranging between 50% and 500%, preferably 100%.

14. The position transducer (100) according to at least one of the preceding claims, wherein said coating and fixing element (40) made using the polymeric compound has a shore A hardness ranging between 20-80, preferably 45.

15. The position transducer (100) according to claim 1, further comprising a conductive element (11) having a first end mechanically fastened to the end (1') of the waveguide (1) and a second end fastened to a metal track arranged on the support plate (24) to electrically connect the waveguide (1) and an electronic circuit for the generation of excitation current pulses of the guide (1).

16. The position transducer (100) according to claim 15, wherein said coating and fixing element (40) of a polymeric material completely coats said conductive element (11) thereby enclosing the latter.

17. The position transducer (100) according to claim 15, wherein said conductive element (11) is a wire having the diameter of cross-section ranging between 0.05 mm and 0.25 mm, preferably 0.15 mm.

18. The position transducer (100) according to claim 17, wherein said first end of the wire (11) is fastened to the end (1') of the waveguide (1) by means of a soldering which provides on the end (1') of the waveguide (1) a respective soldering area lower than or almost equal to the area of a cross-section or the guide (1).

## Patentansprüche

1. Rohrförmiger magnetostriktiver Positionsaufnehmer (100), umfassend:
- einen magnetostriktiven Wellenleiter (1), welcher geeignet ist, mechanische Torsionswellen zu übertragen, wobei der Wellenleiter innerhalb eines Tragerohrs (10) aufgenommen ist;
- Detektions- und Übermittlungsmittel (20, 21) für Torsionswellen, welche mit dem Tragerohr (10) verbunden sind, um so einem Ende (1`) des Wellenleiters (1) betriebsmäßig zugeordnet zu sein;
- ein Trageelement (24) für die Detektions- und Übermittlungsmittel (20, 21);
- ein aus einem Polymermaterial hergestelltes Element (40), welches das Ende (1`) des Wellenleiters (1) einhüllt und das Ende an dem Trageelement (24) befestigt,
**dadurch gekennzeichnet, dass** das Trageelement eine Trageplatte (24) umfasst, welche an dem Tragerohr (10) proximal zu dem Ende (1') des Wellenleiters (1) befestigt ist, wobei das Element (40) aus Polymermaterial das Ende (1') an der Trageplatte (24) befestigt.

2. Positionsaufnehmer (100) nach Anspruch 1, wobei die Trageplatte (24) dazu eingerichtet ist, eine gedruckte Elektronikplatine aufzunehmen, welche dazu eingerichtet ist, das von den Detektions- und Übermittlungsmitteln (20, 21) übermittelte elektrische Signal zu verarbeiten.

3. Positionsaufnehmer (100) nach Anspruch 1, wobei das aus einem Polymermaterial hergestellte einhüllende und befestigende Element (40) ein Harz oder ein Polymer-Verbundmaterial ist.

4. Positionsaufnehmer (100) nach Anspruch 3, wobei das Verbundmaterial ein Harz, Additive und Füllstoffe umfasst.

5. Positionsaufnehmer (100) nach Anspruch 3 oder 4, wobei das Harz ein bei Raumtemperatur vulkanisierendes (RTV) Silikon oder Epoxidharz ist.

6. Positionsaufnehmer (100) nach Anspruch 4, wobei das Verbundmaterial Vernetzungsmittel und Lösungsmittel umfasst.

7. Positionsaufnehmer (100) nach Anspruch 4, wobei die Füllstoffe isolierende Füllstoffe sind, umfassend: Titandioxid, Zinkoxid, Silica, Aluminiumoxid, Glas.

8. Positionsaufnehmer (100) nach Ansprüchen 4 bis 7, wobei das Harz des Polymer-Verbundmaterials einen Gewichtsanteil von mehr als 30%, vorzugsweise 70% bis 90% aufweist.

9. Positionsaufnehmer (100) nach Anspruch 8, wobei die Additive, Vernetzungsmittel und Lösungsmittel des Polymer-Verbundmaterials einen Gewichtsanteil aufweisen, welcher zwischen 0% und 30%, vorzugsweise 0% bis 10%, beträgt.

10. Positionsaufnehmer (100) nach Anspruch 8 und 9, wobei die Füllstoffe des Polymer-Verbundmaterials einen Gewichtsanteil aufweisen, welcher zwischen 0% und 70%, vorzugsweise 0% bis 20%, beträgt.

11. Positionsaufnehmer (100) nach Anspruch 4, wobei die Füllstoffe leitfähige Füllstoffe sind, welche Silber- oder Kupferstaub oder -körnchen umfassen.

12. Positionsaufnehmer (100) nach wenigstens einem der vorhergehenden Ansprüche, wobei das unter Verwendung des Polymer-Verbundmaterials hergestellte einhüllende und befestigende Element (40) eine Reißfestigkeit von größer als 1 MPa aufweist.

13. Positionsaufnehmer (100) nach wenigstens einem der vorhergehenden Ansprüche, wobei das unter Verwendung des Polymer-Verbundmaterials hergestellte einhüllende und befestigende Element (40) eine Reißdehnung aufweist, welche zwischen 50% und 500%, vorzugsweise 100%, beträgt.

14. Positionsaufnehmer (100) nach wenigstens einem der vorhergehenden Ansprüche, wobei das unter Verwendung des Polymer-Verbundmaterials hergestellte einhüllende und befestigende Element (40) eine Shore-Härte A aufweist, welche zwischen 20 - 80, vorzugsweise 45, beträgt.

15. Positionsaufnehmer (100) nach Anspruch 1, ferner umfassend ein leitfähiges Element (11), welches ein erstes Ende, welches mechanisch an dem Ende (1') des Wellenleiters (1) befestigt ist, und ein zweites Ende aufweist, welches an einer Metallbahn befestigt ist, welche an der Trageplatte (24) angeordnet ist, um den Wellenleiter (1) und eine elektronische Schaltung für die Erzeugung von Anregungs-Strompulsen des Leiters (1) elektrisch zu verbinden.

16. Positionsaufnehmer (100) nach Anspruch 15, wobei das einhüllende und befestigende Element (40) aus einem Polymermaterial das leitfähige Element (11) vollständig einhüllt, wodurch letzteres umschlossen wird.

17. Positionsaufnehmer (100) nach Anspruch 15, wobei das leitfähige Element (11) ein Draht ist, welcher den Querschnitts-Durchmesser aufweist, welcher zwischen 0,05 mm und 0,25 mm, vorzugsweise 0,15 mm, beträgt.

18. Positionsaufnehmer (100) nach Anspruch 17, wobei das erste Ende des Drahts (11) an dem Ende (1') des Wellenleiters (1) mittels einer Lötstelle befestigt ist, welche an dem Ende (1') des Wellenleiters (1) eine entsprechende Lötfläche vorsieht, welche geringer oder beinahe gleich der Fläche eines Querschnitts des Leiters (1) ist.

## Revendications

1. Transducteur de position magnétostrictif tubulaire (100), comprenant :
- un guide d'ondes magnétostrictif (1) convenant pour propager des ondes mécaniques de torsion, ledit guide d'ondes étant logé dans un tube de support (10) ;
- un moyen de détection et de transduction (20, 21) desdites ondes de torsion connecté au tube de support (10) de manière à être associé de façon opérative à une extrémité (1') du guide d'ondes (1);
- un élément de support (24) pour ledit moyen de détection et de transduction (20, 21) ;
- un élément (40) formé par un matériau polymère revêtant ladite extrémité (1') du guide d'ondes (1) et fixant ladite extrémité audit élément de support (24),
**caractérisé en ce que** ledit élément de support comprend une plaque de support (24) fixée au tube de support (10) à proximité de ladite extrémité (1') du guide d'ondes (1), l'élément (40) en matériau polymère fixant ladite extrémité (1') à la plaque de support (24).

2. Transducteur de position (100) selon la revendication 1, dans lequel ladite plaque de support (24) est configurée pour loger une carte de circuit imprimé électronique configurée pour traiter le signal électrique produit par ledit moyen de détection et de transduction (20, 21).

3. Transducteur de position (100) selon la revendication 1, dans lequel ledit élément de revêtement et de fixation (40) formé par une matière polymère est une résine ou un composé polymère.

4. Transducteur de position (100) selon la revendication 3, dans lequel ledit composé comprend une résine, des additifs, et des masses de remplissage.

5. Transducteur de position (100) selon la revendication 3 ou 4, dans lequel ladite résine est de la silicone de vulcanisation à température ambiante (RTV ou « room temperature vulcanizing ») ou une résine époxy.

6. Transducteur de position (100) selon la revendication 4, dans lequel ledit composé comprend des agents de réticulation et des solvants.

7. Transducteur de position (100) selon la revendication 4, dans lequel lesdites masses de remplissage sont des masses de remplissage isolantes comprenant : du dioxyde de titane, de l'oxyde de zinc, de la silice, de l'alumine, du verre.

8. Transducteur de position (100) selon les revendications 4 à 7, dans lequel ladite résine du composé polymère a un pourcentage pondéral de plus de 30 %, de préférence de 70 % à 90 %.

9. Transducteur de position (100) selon la revendication 8, dans lequel lesdits additifs, agents de réticulation et solvants du composé polymère ont un pourcentage pondéral compris entre 0 % et 30 %, de préférence de 0 % à 10 %.

10. Transducteur de position (100) selon la revendication 8 et 9, dans lequel lesdites masses de remplissage du composé polymère ont un pourcentage pondéral compris entre 0 % et 70 %, de préférence de 0 % à 20 %.

11. Transducteur de position (100) selon la revendication 4, dans lequel lesdites masses de remplissage sont des masses de remplissage conductrices comprenant de la poussière ou des granules d'argent ou de cuivre.

12. Transducteur de position (100) selon l'une au moins des revendications précédentes, dans lequel ledit élément de revêtement et de fixation (40) fait en utilisant le composé polymère a une résistance à la rupture par traction supérieure à 1 MPa.

13. Transducteur de position (100) selon l'une au moins des revendications précédentes, dans lequel ledit élément de revêtement et de fixation (40) fait en utilisant le composé polymère a un allongement à la rupture compris entre 50 % et 500 %, de préférence de 100 %.

14. Transducteur de position (100) selon l'une au moins des revendications précédentes, dans lequel ledit élément de revêtement et de fixation (40) fait en utilisant le composé polymère a une dureté Shore A comprise entre 20-80, de préférence de 45.

15. Transducteur de position (100) selon la revendication 1, comprenant en outre un élément conducteur (11) ayant une première extrémité fixée mécaniquement à l'extrémité (1') du guide d'ondes (1) et une deuxième extrémité fixée à une piste conductrice métallique disposée sur la plaque de support (24) pour connecter électriquement le guide d'ondes (1) et un circuit électronique pour la génération d'impulsions de courant d'excitation du guide (1).

16. Transducteur de position (100) selon la revendication 15, dans lequel ledit élément de revêtement et de fixation (40) en un matériau polymère revêt complètement ledit élément conducteur (11) en enfermant de la sorte ce dernier.

17. Transducteur de position (100) selon la revendication 15, dans lequel ledit élément conducteur (11) est un conducteur ayant le diamètre de section transversale compris entre 0,05 mm et 0,25 mm, de préférence de 0,15 mm.

18. Transducteur de position (100) selon la revendication 17, dans lequel ladite première extrémité du conducteur (11) est fixée à l'extrémité (1') du guide d'ondes (1) au moyen d'un soudage qui fournit à l'extrémité (1') du guide d'ondes (1) une zone de soudure respective inférieure ou presque égale à la zone d'une section transversale du guide (1).
